# EUROPÄISCHE PATENTANMELDUNG

(11) **EP 3 512 060 A1**
(43) Veröffentlichungstag der Anmeldung: **17.07.2019**
(21) Anmeldenummer: 19151432.2
(22) Anmeldetag: 11.01.2019
(51) Int. Cl.: H02H 3/05, B60R 16/03, G06F 21/74, H02J 1/14

(54) **ELEKTRISCHES GERÄT MIT EINER ABGESICHERTEN UND EINER UNGESICHERTEN FUNKTIONSEINRICHTUNG**

(30) Priorität: 12.01.2018 DE 102018100627
(71) Anmelder: Krohne Messtechnik GmbH, 47058 Duisburg (DE)
(72) Erfinder: Glasmachers, Holger, 44795 Bochum (DE)
(74) Vertreter: Gesthuysen Patent- und Rechtsanwälte

(57) **Zusammenfassung**

Dargestellt und beschrieben ist ein elektrisches Gerät (1) mit einer abgesicherten Funktionseinrichtung (2), einer ungesicherten Funktionseinrichtung (3) und einer Versorgungseinrichtung (4), wobei die abgesicherte Funktionseinrichtung eine erste Schnittstelleneinrichtung (5) zur sicheren Kommunikation und eine Steuerungseinrichtung (6) und die ungesicherte eine zweite Schnittstelleneinrichtung (7) zur unsicheren Kommunikation aufweist und wobei die abgesicherte und die ungesicherte Funktionseinrichtung (3) zur Kommunikation untereinander ausgebildet sind.

Der Erfindung liegt die Aufgabe zugrunde, Auswirkungen eines Angriffs über die zweite Schnittstelleneinrichtung zumindest abzumildern.

Die Aufgabe ist dadurch gelöst, dass die Versorgungseinrichtung (4) eine Versorgungseinheit (17) aufweist, dass zwischen der Versorgungseinheit (17) und der abgesicherten Funktionseinrichtung (2) ein erster Leistungspfad (14) und zwischen der Versorgungseinheit (17) und der ungesicherten Funktionseinrichtung (3) ein zweiter Leistungspfad (15) angeordnet ist, dass im zweiten Leistungspfad (15) ein Schalter (18) angeordnet ist, dass der zweite Leistungspfad (15) in einem ersten Schaltzustand durchgeschleift und in einem zweiten Schaltzustand aufgetrennt ist, dass die Steuerungseinrichtung (6) den Schalter (18) in den ersten Schaltzustand steuert, unter Verwendung eines eine Leistungsaufnahme der ungesicherten Funktionseinrichtung wiedergebenden Indikators die bestimmungsgemäße Funktion der ungesicherten Funktionseinrichtung (3) überwacht und bei Überschreitung eines vorgegebenen Indikatorgrenzwerts den Schalter (18) in den zweiten Schaltzustand steuert.

## Beschreibung

Die Erfindung betriff ein elektrisches Gerät mit einer abgesicherten Funktionseinrichtung, einer ungesicherten Funktionseinrichtung und einer Versorgungseinrichtung zur Versorgung der abgesicherten Funktionseinrichtung und der ungesicherten Funktionseinrichtung mit elektrischer Energie. Die abgesicherte Funktionseinrichtung weist eine erste Schnittstelleneinrichtung zur sicheren Kommunikation und eine Steuerungseinrichtung und die ungesicherte Funktionseinrichtung weist eine zweite Schnittstelleneinrichtung zur unsicheren Kommunikation auf. Die abgesicherte Funktionseinrichtung und die ungesicherte Funktionseinrichtung sind zur Kommunikation untereinander ausgebildet. Oftmals ist die Steuerungseinrichtung ausgebildet, die Kommunikation zwischen der abgesicherten und ungesicherten Funktionseinrichtung zu unterbrechen und/oder einzuschränken, was zu einer Absicherung der abgesicherten Funktionseinrichtung im Vergleich zur ungesicherten Funktionseinrichtung beiträgt. Eine Einschränkung ist zum Beispiel, dass Informationen nur von der abgesicherten zur ungesicherten Funktionseinrichtung kommuniziert werden können. Eine Funktionseinrichtung weist neben der Schnittstelleneinrichtung für gewöhnlich weitere Komponenten auf, die weitere Funktionen umsetzen.

Elektrische Geräte der angegebenen Art werden zum Beispiel in industriellen Anlagen eingesetzt. Industriellen Anlagen mit diesen elektrischen Geräten setzen zumeist auch weitere elektrische Einrichtungen, wie zum Beispiel Prozessleitsysteme oder Computersysteme, ein, die ebenfalls Schnittstelleneinrichtungen aufweisen. Zumindest einige der elektrischen Einrichtungen, wozu auch die elektrischen Geräte gehören, einer industriellen Anlage sind über die Schnittstelleneinrichtungen mit einem Übertragungsmedium verbunden und kommunizieren über dieses miteinander.

Kommunikation ist allgemein die Übertragung von Informationen durch Signale. Kommunikation in industriellen Anlagen wird dabei für gewöhnlich unterteilt zum einen in sichere Kommunikation und zum anderen in unsichere Kommunikation. Bei sicherer Kommunikation sind die übertragenen Informationen gegen Manipulationen geschützt, sodass ihre Integrität gewährleistet ist. Bei unsicherer Kommunikation ist das nicht der Fall. Sichere Kommunikation wird durch Maßnahmen angestrebt, die eine Manipulation von Informationen zumindest erschweren und im Idealfall unmöglich machen. Entsprechend erfolgt sichere Kommunikation mit Schnittstellen zur sicheren Kommunikation und ungesicherte Kommunikation mit Schnittstellen zur unsicheren Kommunikation. Es liegt zum einen im Ermessen des Betreibers einer industriellen Anlage und zum anderen in der Art der industriellen Anlage, was als sicher und was als unsicher angesehen wird. Eine allgemeingültige Definition ist nicht möglich.

Für gewöhnlich ist ein elektrisches Gerät der beschriebenen Art in einer industriellen Anlage über die erste Schnittstelleneinrichtung mit weiteren Einrichtungen der industriellen Anlage zur sicheren Kommunikation verbunden. Weiterhin wird oftmals die zweite Schnittstelleneinrichtung zur unsicheren Kommunikation verwendet, zum Beispiel um bestimmte Informationen aus dem elektrischen Gerät durch beliebige Hilfsgeräte auszulesen. Schon aufgrund des Zugriffs beliebiger Hilfsgeräte auf die zweite Schnittstelleneinrichtung wird diese Kommunikation als unsicher und die zweite Schnittstelle als Schwachstelle in der industriellen Anlage angesehen.

Diese Schwachstelle ermöglicht oftmals, die industrielle Anlage durch einen Angriff zu beeinträchtigen. Denn es ist erkannt worden, dass es bei elektrischen Geräten der beschriebenen Art möglich ist, über die zweite Schnittstelleneinrichtung auf die ungesicherte Funktionseinrichtung zuzugreifen und die Leistungsaufnahme der ungesicherten Funktionseinrichtung derart zu steigern, dass die Versorgungseinrichtung nicht mehr ausreichend Leistung für die abgesicherte Funktionseinrichtung bereitstellen kann. Wenn die abgesicherte Funktionseinrichtung nicht mehr mit ausreichender Leistung versorgt wird, ist deren Funktion nicht mehr gewährleistet. Aufgrund der Verbindung der abgesicherten Funktionseinrichtung mit anderen Einrichtungen der industriellen Anlage werden auch diese anderen Einrichtungen beeinträchtigt.

Eine Aufgabe der vorliegenden Erfindung ist daher die Angabe eines elektrischen Geräts, bei dem die aufgezeigte Schwachstelle nicht mehr vorhanden oder jedenfalls abgemildert ist.

Die Aufgabe ist bei einem elektrischen Gerät der beschriebenen Art durch eine erste Lehre gemäß Patentanspruch 6 gelöst. Die Versorgungseinrichtung weist eine erste Versorgungseinheit und eine zweite Versorgungseinheit auf, wobei die erste und zweite Versorgungseinheit separat voneinander sind. Im Betrieb des elektrischen Geräts versorgt die erste Versorgungseinheit die abgesicherte Funktionseinrichtung und die zweite Versorgungseinheit die ungesicherte Funktionseinrichtung mit elektrischer Energie. Dazu ist zwischen der ersten Versorgungseinheit und der abgesicherten Funktionseinrichtung ein erster Leistungspfad und zwischen der zweiten Versorgungseinheit und der ungesicherten Funktionseinrichtung ein zweiter Leistungspfad angeordnet. Auch der erste und der zweite Leistungspfad sind separat voneinander.

Die separate Ausbildung der Versorgungseinheiten bedeutet, dass sie unabhängig voneinander die jeweilige Funktionseinrichtung mit elektrischer Energie versorgen. Die voneinander unabhängige Versorgung bedeutet, dass der Ausfall oder die Beeinträchtigung einer der Versorgungseinheiten keine Auswirkungen auf die andere Versorgungseinheit hat, sodass die andere Versorgungseinheit die entsprechende Funktionseinrichtung weiterhin ausreichend mit elektrischer Energie versorgen kann. Somit ist die beschriebene Schwachstelle behoben.

Die Aufgabe ist bei einem elektrischen Gerät der beschriebenen Art auch durch eine zweite Lehre gemäß Patentanspruch 7 gelöst. Die Versorgungseinrichtung weist eine Versorgungseinheit auf. Zwischen der Versorgungseinheit und der abgesicherten Funktionseinrichtung ist ein erster Leistungspfad zur Versorgung der abgesicherten Funktionseinrichtung und zwischen der Versorgungseinheit und der ungesicherten Funktionseinrichtung ist ein zweiter Leistungspfad zur Versorgung der ungesicherten Funktionseinrichtung mit elektrischer Energie aus der Versorgungseinheit angeordnet. Weiter ist im zweiten Leistungspfad eine Leistungsbegrenzungseinrichtung angeordnet. Die Leistungsbegrenzungseinrichtung ist ausgebildet, eine Leistungsübertragung über die Leistungsbegrenzungseinrichtung zu begrenzen, sodass eine von der Versorgungseinheit abgebbare Leistung jedenfalls zur Versorgung der abgesicherten Funktionseinrichtung ausreichend ist.

Die Aufgabe ist bei einem elektrischen Gerät der beschriebenen Art ebenfalls auch durch eine dritte Lehre gemäß Patentanspruch 1 gelöst. Die Versorgungseinrichtung weist eine Versorgungseinheit auf. Zwischen der Versorgungseinheit und der abgesicherten Funktionseinrichtung ist ein erster Leistungspfad zur Versorgung der abgesicherten Funktionseinrichtung und zwischen der Versorgungseinheit und der ungesicherten Funktionseinrichtung ist ein zweiter Leistungspfad zur Versorgung der ungesicherten Funktionseinrichtung mit elektrischer Energie aus der Versorgungseinheit angeordnet. Weiter ist im zweiten Leistungspfad ein Schalter angeordnet, der in einen ersten Schaltzustand und in einen zweiten Schaltzustand steuerbar ist. Im Schalter ist der zweite Leistungspfad im ersten Schaltzustand durchgeschleift und im zweiten Schaltzustand aufgetrennt. Im Betrieb des elektrischen Geräts steuert die Steuerungseinrichtung den Schalter in den ersten Schaltzustand und überwacht unter Verwendung eines eine Leistungsaufnahme der ungesicherten Funktionseinrichtung wiedergebenden Indikators die bestimmungsgemäße Funktion der ungesicherten Funktionseinrichtung. Bei Überschreitung eines vorgegebenen Indikatorgrenzwerts schaltet die Steuerungseinrichtung den Schalter vom ersten in den zweiten Schaltzustand. Das Durchschleifen eines Pfads, wie dem zweiten Leistungspfad, durch einen Schalter bedeutet, dass der Pfad im Schalter unterbrechungsfrei ist. Der vorgegebene Indikatorgrenzwert ist für gewöhnlich in der Steuerungseinrichtung abgespeichert.

Im Gegensatz zum elektrischen Gerät gemäß der ersten Lehre weist das elektrische Gerät gemäß der zweiten und dritten Lehre eine Versorgungseinheit auf, die sowohl die abgesicherte als auch die ungesicherte Funktionseinrichtung im Betrieb mit elektrischer Energie versorgt.

Damit ein Angriff nur Auswirkungen auf die ungesicherte Funktionseinrichtung, aber nicht auf die abgesicherte Funktionseinrichtung hat, weist das elektrische Gerät gemäß der zweiten Lehre die Leistungsbegrenzungseinrichtung im zweiten Leistungspfad auf. Durch diese steigt bei einem Angriff die Entnahme von elektrischer Leistung aus der Versorgungseinrichtung durch die ungesicherte Funktionseinrichtung nicht soweit an, dass die Versorgungseinrichtung nicht mehr ausreichend Leistung für die abgesicherte Funktionseinrichtung bereitstellen kann.

In einer Ausgestaltung des elektrischen Geräts ist vorgesehen, dass die Leistungsbegrenzungseinrichtung eine integrierte Schaltung ist.

Damit ein Angriff nur Auswirkungen auf die ungesicherte Funktionseinrichtung, aber nicht auf die abgesicherte Funktionseinrichtung hat, weist das elektrische Gerät gemäß der dritten Lehre den steuerbaren Schalter im zweiten Leistungspfad auf und ist die Steuerungseinrichtung zur Steuerung des Schalters ausgebildet. Im Betrieb des elektrischen Geräts steuert die Steuerungseinrichtung den Schalter grundsätzlich in den ersten Schaltzustand, sodass der zweite Leistungspfad durch den Schalter geschleift ist. Weiter überwacht die Steuerungseinrichtung unter Verwendung des Indikators die bestimmungsgemäße Funktion der ungesicherten Funktionseinrichtung. Der Indikator spiegelt dabei eine Leistungsaufnahme der ungesicherten Funktionseinrichtung wieder. Der Verwendung eines solchen Indikators liegt die Erkenntnis zugrunde, dass ein Angriff, um erfolgreich zu sein, die Leistungsaufnahme der ungesicherten Funktionseinrichtung so weit erhöhen muss, dass die Versorgungseinheit nicht mehr ausreichend Leistung für beide Funktionseinrichtungen bereitstellen kann. Wenn die Leistungsaufnahme durch einen Angriff erhöht ist, ist die Funktion der ungesicherten Funktionseinrichtung nicht mehr bestimmungsgemäß. Eine maximal von der Versorgungseinheit zur Verfügung stellbare Leistung ist demnach ein Maß für den vorgebbaren Indikatorgrenzwert. Wenn die Steuerungseinrichtung bei der Überwachung eine Überschreitung des Indikatorgrenzwerts feststellt, steuert sie den Schalter vom ersten in den zweiten Schaltzustand. Demnach hat ein Angriff über die zweite Schnittstelleneinrichtung keine Auswirkungen auf die abgesicherte Funktionseinrichtung und ist somit die beschriebene Schwachstelle behoben.

Nach den Lehren weist die Versorgungseinrichtung mindestens eine Versorgungseinheit auf. Eine Versorgungseinheit versorgt einen Verbraucher, wie zum Beispiel die abgesicherte und/oder ungesicherte Funktionseinrichtung, mit elektrischer Energie, sodass deren bestimmungsgemäße Funktion gegeben ist. Dazu stellt die Versorgungseinheit eine konstante Spannung bei einem von dem Verbraucher abhängigen Strom oder einen konstanten Strom bei einer von dem Verbraucher abhängigen Spannung zur Verfügung.

Die Versorgungseinrichtung bezieht die dafür notwendige elektrische Energie von einer Versorgungsquelle außerhalb des elektrischen Geräts. Wenn das elektrische Gerät über die erste Schnittstelleneinrichtung zur sicheren Kommunikation zum Beispiel mit einer Stromschleife verbunden ist, bietet sich die Versorgung mit elektrischer Energie aus dieser an. Dazu ist dann auch die Versorgungseinrichtung mit der Stromschleife verbunden, sodass sie aus dieser versorgt wird. Weiter bietet sich dann eine Kommunikation über die erste Schnittstelleneinrichtung mit analogen Stromsignalen, zum Beispiel nach dem Standard mit 4 mA bis 20 mA, und/oder mit digitalen Signalen, zum Beispiel nach dem HART-Standard, an. Die erste Schnittstelle ist dann eine Stromschnittstelle.

Es besteht die Möglichkeit, dass ein Angriff über die zweite Schnittstelleneinrichtung erfolgreich ist. Bei einem erfolgreichen Angriff ist die Versorgungseinheit, die sowohl die abgesicherte als auch ungesicherte Funktionseinrichtung versorgt, überlastet, sodass sie nicht mehr ausreichend Energie für die abgesicherte Funktionseinrichtung bereitstellen kann. Das hat zur Folge, dass die bestimmungsgemäße Funktion der abgesicherten Funktionseinrichtung nicht mehr gewährleistet ist, was auch bedeutet, dass die Steuerungseinrichtung den Schalter nicht mehr ansteuert. Dieser Umstand wird jedoch in einer Ausgestaltung des elektrischen Geräts zur weiteren Abmilderung der zuvor beschriebenen Schwachstelle ausgenutzt, indem der Schalter unangesteuert im zweiten Schaltzustand ist. Der Schalter ist also derart ausgebildet, dass er ohne Ansteuerung durch die Steuerungseinrichtung in seinem zweiten Schaltzustand ist. Da in diesem Schaltzustand die Versorgung der ungesicherten Funktionseinrichtung über den zweiten Leistungspfad jedoch aufgetrennt ist, steht wieder ausreichend Energie zur Versorgung der abgesicherten Funktionseinrichtung zur Verfügung, sodass diese wieder ihre bestimmungsgemäße Funktion aufnimmt.

Im Betrieb überwacht die Steuerungseinrichtung unter Verwendung eines eine Leistungsaufnahme der ungesicherten Funktionseinrichtung wiedergebenden Indikators die bestimmungsgemäße Funktion der ungesicherten Funktionseinrichtung. Als Indikator können verschiedene die Leistungsaufnahme der ungesicherten Funktionseinrichtung widerspiegelnde Signale verwendet werden.

In einer Ausgestaltung ist vorgesehen, dass der Indikator eine Versorgungsspannung am zweiten Leistungspfad und der Indikatorgrenzwert eine Versorgungsgrenzspannung ist und die Steuerungseinrichtung im Betrieb die Versorgungsspannung misst. Die Steuerungseinrichtung ist dementsprechend zur Messung der Versorgungsspannung ausgebildet. Wenn die ungesicherte Funktionseinrichtung erfolgreich angegriffen wird, ist die bestimmungsgemäße Funktion nicht mehr gegeben und die Leistungsaufnahme steigt, was ein Absinken der Versorgungsspannung zur Folge hat. Die Versorgungsgrenzspannung liegt deshalb zwischen der Versorgungsspannung bei bestimmungsgemäßer Funktion und der abgesunkenen Versorgungsspannung bei nicht bestimmungsgemäßer Funktion. Das Überschreiten der Versorgungsgrenzspannung erfolgt bei einem erfolgreichen Angriff von oben nach unten. In einer weiteren Ausgestaltung ist vorgesehen, dass der Indikator ein Versorgungsstrom durch den zweiten Leistungspfad und der Indikatorgrenzwert ein Versorgungsgrenzstrom ist und die Steuerungseinrichtung im Betrieb den Versorgungsstrom misst. Die Steuerungseinrichtung ist dementsprechend zur Messung des Versorgungsstroms ausgebildet. Wenn die ungesicherte Funktionseinrichtung erfolgreich angegriffen wird, ist die bestimmungsgemäße Funktion nicht mehr gegeben und die Leistungsaufnahme steigt, was ein Ansteigen des Versorgungsstroms zur Folge hat. Der Versorgungsgrenzstrom liegt deshalb zwischen dem Versorgungsstrom bei bestimmungsgemäßer Funktion und dem angestiegenen Versorgungsstrom bei nicht bestimmungsgemäßer Funktion. Das Überschreiten des Versorgungsgrenzstroms erfolgt bei einem erfolgreichen Angriff von unten nach oben.

In den beiden vorangehenden Ausgestaltungen wird entweder die Versorgungsspannung oder der Versorgungsstrom als Indikator verwendet. Versorgungsspannung und Versorgungsstrom zusammen bestimmen eine Leistungsaufnahme der ungesicherten Funktionseinrichtung. Deshalb ist in einer weiteren Ausgestaltung vorgesehen, dass der Indikator die Leistungsaufnahme über den zweiten Leistungssignalpfad und der Indikatorgrenzwert eine Leistungsgrenzaufnahme ist und die Steuerungseinrichtung im Betrieb die Leistungsaufnahme bestimmt. Die Steuerungseinrichtung ist dementsprechend sowohl zur Messung der Versorgungsspannung und des Versorgungsstroms als auch zur Bestimmung der Leistungsaufnahme aus der gemessenen Versorgungsspannung und des gemessenen Versorgungsstroms ausgebildet. Wenn die ungesicherte Funktionseinrichtung erfolgreich angegriffen wird, ist die bestimmungsgemäße Funktion nicht mehr gegeben und die Leistungsaufnahme steigt. Die Leistungsgrenzaufnahme liegt deshalb zwischen der Leistungsaufnahme bei bestimmungsgemäßer Funktion und der angestiegenen Leistungsaufnahme bei nicht bestimmungsgemäßer Funktion. Das Überschreiten der Leistungsgrenzaufnahme erfolgt bei einem erfolgreichen Angriff von unten nach oben.

Die erste Schnittstelleneinrichtung ist zur sicheren Kommunikation und die zweite Schnittstelleneinrichtung zur unsicheren Kommunikation ausgebildet. Die Ausbildung der zweiten Schnittstelleneinrichtung nur zur unsicheren und nicht zur sicheren Kommunikation ist für gewöhnlich eine Konsequenz der Ausbildung der zweiten Schnittstelleneinrichtung, zum Beispiel Informationen aus dem elektrischen Gerät durch Hilfsgeräte, wie zum Beispiel Laptops oder Tablets, auslesen zu können. In einer weiteren Ausgestaltung eines elektrischen Geräts ist vorgesehen, dass die erste Schnittstelleneinrichtung als leitungsgebundene Schnittstelle und die zweite Schnittstelleneinrichtung als Funkschnittstelle ausgebildet ist. Die Ausbildung der ersten Schnittstelleneinrichtung als leitungsgebundene Schnittstelle trägt zur Sicherheit der Kommunikation bei, da ein Zugriff zur Ausführung eines Angriffs auf eine leitungsgebundene Schnittstelle schwerer ist als zum Beispiel ein Zugriff auf eine Funkschnittstelle. Die Ausbildung der zweiten Schnittstelleneinrichtung als Funkschnittstelle trägt zur Zugänglichkeit für Hilfsgeräte mit den erwähnten Konsequenzen bei.

In einer weiteren Ausgestaltung ist vorgesehen, dass das elektrische Gerät zum Einsatz in der Prozessindustrie ausgebildet ist.

In einer weiteren Ausgestaltung ist vorgesehen, dass das elektrische Gerät als Feldgerät ausgebildet ist.

Im Einzelnen ist eine Vielzahl von Möglichkeiten gegeben, das elektrische Gerät auszugestalten und weiter zu bilden. Dazu wird verwiesen sowohl auf die den Patentansprüchen 1 und 2 nachgeordneten Patentansprüche als auch auf die nachfolgende Beschreibung von drei bevorzugten Ausführungsbeispielen in Verbindung mit der Zeichnung. In der Zeichnung zeigt
- Fig. 1: ein erstes Ausführungsbeispiel eines elektrischen Geräts,
- Fig. 2: ein zweites Ausführungsbeispiel eines elektrischen Geräts und
- Fig. 3: ein drittes Ausführungsbeispiel eines elektrischen Geräts.

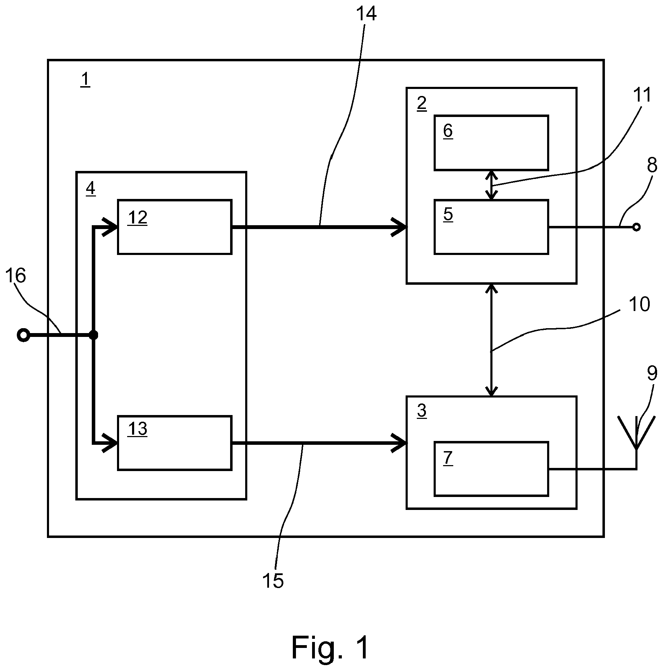

Fig. 1 zeigt wesentliche Merkmale eines ersten Ausführungsbeispiels eines elektrischen Geräts 1, welches als Feldgerät und für den Einsatz in der Prozessindustrie ausgebildet ist. Das elektrische Gerät 1 weist zunächst eine abgesicherte Funktionseinrichtung 2, eine ungesicherte Funktionseinrichtung 3 und eine Versorgungseinrichtung 4 auf.

Die abgesicherte Funktionseinrichtung 2 weist eine erste Schnittstelleneinrichtung 5 und eine Steuerungseinrichtung 6 und die ungesicherte Funktionseinrichtung 3 weist eine zweite Schnittstelleneinrichtung 7 auf. Die erste Schnittstelleneinrichtung 5 ist zur sicheren Kommunikation als leitungsgebundene Schnittstelle und die zweite Schnittstelleneinrichtung 7 ist zur unsicheren Kommunikation als Funkschnittstelle ausgebildet. Dazu weist die als leitungsgebundene Schnittstelle ausgebildete erste Schnittstelleneinrichtung 5 einen Schnittstellenanschluss 8 für ein leitungsgebundenes Übertragungsmedium und die als Funkschnittstelle ausgebildete zweite Schnittstelleneinrichtung 7 eine Antenne 9 auf. Die abgesicherte Funktionseinrichtung 2 und die ungesicherte Funktionseinrichtung 3 sind zur Kommunikation untereinander über einen ersten Kommunikationskanal 10 ausgebildet. Auch die Steuerungseinrichtung 6 und die erste Schnittstelleneinrichtung 5 sind zur Kommunikation untereinander ausgebildet, und zwar über einen zweiten Kommunikationskanal 11.

Die Versorgungseinrichtung 4 weist eine erste Versorgungseinheit 12 und eine zweite Versorgungseinheit 13 auf. Die erste Versorgungseinheit 12 und die zweite Versorgungseinheit 13 sind separat voneinander ausgebildet. Im Betrieb des elektrischen Geräts 1 versorgt die erste Versorgungseinheit 12 die abgesicherte Funktionseinrichtung 2 und die zweite Versorgungseinheit 13 die ungesicherte Funktionseinrichtung 3 mit elektrischer Energie. Zur Versorgung der abgesicherten Funktionseinrichtung 2 mit elektrischer Energie durch die erste Versorgungseinheit 12 ist zwischen der ersten Versorgungseinheit 12 und der abgesicherten Funktionseinrichtung 2 ein erster Leistungspfad 14 angeordnet. Entsprechend ist zwischen der zweiten Versorgungseinheit 13 und der ungesicherten Funktionseinrichtung 3 ein zweiter Leistungspfad 15 angeordnet. Die zum Betrieb benötigte Energie wird dem elektrischen Gerät 1 über einen dritten Leistungspfad 16 zugeführt, der an eine externe Versorgungsquelle anzuschließen ist. Mit der über den dritten Leistungspfad 16 zugeführten Energie werden zunächst die erste Versorgungseinheit 12 und die zweite Versorgungseinheit 13 und aus diesen dann die abgesicherte Funktionseinrichtung 2 und die ungesicherte Funktionseinrichtung 3 versorgt.

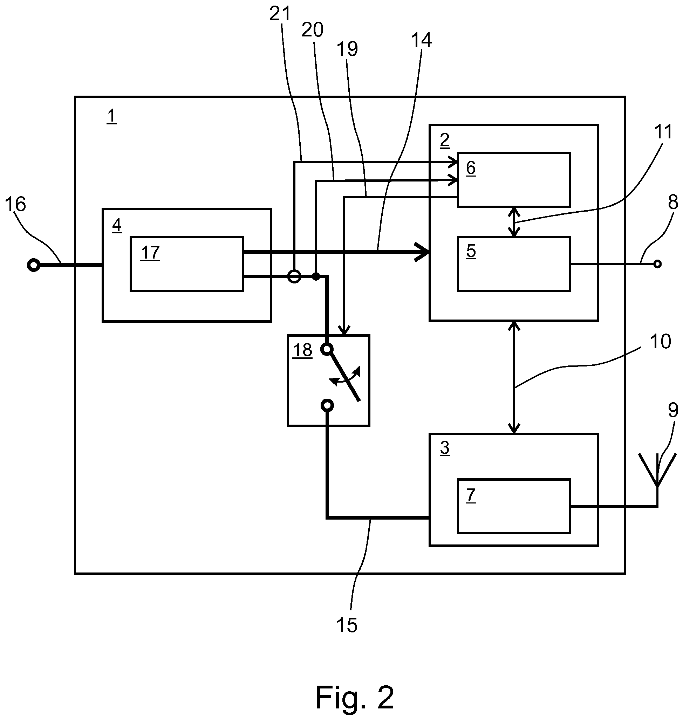

Fig. 2 zeigt wesentliche Merkmale eines zweiten Ausführungsbeispiels eines elektrischen Geräts 1, welches als Feldgerät und für den Einsatz in der Prozessindustrie ausgebildet ist. Das elektrische Gerät weist zunächst eine abgesicherte Funktionseinrichtung 2, eine ungesicherte Funktionseinrichtung 3 und eine Versorgungseinrichtung 4 auf.

Die abgesicherte Funktionseinrichtung 2 weist eine erste Schnittstelleneinrichtung 5 und eine Steuerungseinrichtung 6 und die ungesicherte Funktionseinrichtung 3 weist eine zweite Schnittstelleneinrichtung 7 auf. Die erste Schnittstelleneinrichtung 5 ist zur sicheren Kommunikation als leitungsgebundene Schnittstelle und die zweite Schnittstelleneinrichtung 7 ist zur unsicheren Kommunikation als Funkschnittstelle ausgebildet. Dazu weist die als leitungsgebundene Schnittstelle ausgebildete erste Schnittstelleneinrichtung 5 einen Schnittstellenanschluss 8 für ein leitungsgebundenes Übertragungsmedium und die als Funkschnittstelle ausgebildete zweite Schnittstelleneinrichtung 7 eine Antenne 9 auf. Die abgesicherte Funktionseinrichtung 2 und die ungesicherte Funktionseinrichtung 3 sind zur Kommunikation untereinander über einen ersten Kommunikationskanal 10 ausgebildet. Auch die Steuerungseinrichtung 6 und die erste Schnittstelleneinrichtung 5 sind zur Kommunikation untereinander ausgebildet, und zwar über einen zweiten Kommunikationskanal 11.

Die Versorgungseinrichtung 4 weist eine einzige Versorgungseinheit 17 auf. Im Betrieb des elektrischen Geräts 1 versorgt die Versorgungseinheit 17 die abgesicherte Funktionseinrichtung 2 und die ungesicherte Funktionseinrichtung 3 mit elektrischer Energie. Dazu ist zwischen der Versorgungseinheit 17 und der abgesicherten Funktionseinrichtung 2 ein erster Leistungspfad 14 und zwischen der Versorgungseinheit 17 und der ungesicherten Funktionseinrichtung 3 ein zweiter Leistungspfad 15 angeordnet. Die zum Betrieb benötigte Energie wird dem elektrischen Gerät 1 über einen dritten Leistungspfad 16 zugeführt, der an eine externe Versorgungsquelle anzuschließen ist. Mit der über den dritten Leistungspfad 16 zugeführten Energie wird zunächst die Versorgungseinheit 17 und aus dieser dann die abgesicherte Funktionseinrichtung 2 und die ungesicherte Funktionseinrichtung 3 versorgt.

Im zweiten Leistungspfad 15 ist ein Schalter 18 angeordnet. Der Schalter 18 ist in einem ersten Schaltzustand und in einem zweiten Schaltzustand steuerbar. Der zweite Leistungspfad 15 ist im Schalter 18 im ersten Schaltzustand durchgeschleift und im zweiten Schaltzustand aufgetrennt. Somit erfolgt eine Versorgung der ungesicherten Funktionseinrichtung 3 im ersten Schaltzustand durch die Versorgungseinheit 17 und im zweiten Schaltzustand nicht. Die Steuerungseinrichtung 6 ist zur Steuerung des Schalters 17 ausgebildet. Die Steuerung erfolgt über einen Steuerpfad 19. Somit kann die Steuerungseinrichtung 6 den Schalter 18 entweder in den ersten Schaltzustand oder in den zweiten Schaltzustand steuern. Der Schalter 18 ist derart ausgebildet, dass er bei Nichtansteuerung durch die Steuerungseinrichtung 6 im zweiten Schaltzustand ist.

Im Betrieb des elektrischen Geräts 1 steuert die Steuerungseinrichtung 6 den Schalter 18 zunächst in den ersten Schaltzustand. Weiter überwacht die Steuerungseinrichtung 6 unter Verwendung eines eine Leistungsaufnahme der ungesicherten Funktionseinrichtung 3 wiedergebenden Indikators die bestimmungsgemäße Funktion der ungesicherten Funktionseinrichtung 3. Wenn die Steuerungseinrichtung 6 dabei feststellt, dass ein vorgegebener Indikatorgrenzwert überschritten ist, steuert sie den Schalter 18 in den zweiten Schaltzustand.

Beim vorliegenden Ausführungsbeispiel des elektrischen Geräts 1 ist der Indikator eine Leistungsaufnahme der ungesicherten Funktionseinrichtung 3 über den zweiten Leistungssignalpfad 15 und ist der Indikatorgrenzwert eine Leistungsgrenzaufnahme. Die Steuerungseinrichtung 6 bestimmt im Betrieb des elektrischen Geräts 1 die Leistungsaufnahme der ungesicherten Funktionseinrichtung 3. Dazu ist die Steuerungseinrichtung 6 sowohl zur Messung einer Versorgungsspannung am zweiten Leistungspfad 15 als auch zur Messung eines Versorgungsstroms durch den zweiten Leistungspfad 15 ausgebildet. Die Messung der Versorgungsspannung erfolgt über einen Spannungsmesspfad 20 und die Messung des Versorgungsstroms über einen Strommesspfad 21. Der Versorgungsstrom wird zum Beispiel induktiv oder über einen Shunt im zweiten Leistungspfad 15 gemessen. Weiter ist die Steuerungseinrichtung 6 ausgebildet, aus der gemessenen Versorgungsspannung und aus dem gemessenen Versorgungsstrom die Leistungsaufnahme der ungesicherten Funktionseinrichtung 3 zu bestimmen. Wenn die ungesicherte Funktionseinrichtung 3 nun erfolgreich angegriffen wird, ist die bestimmungsgemäße Funktion dieser nicht mehr gegeben und die Leistungsaufnahme steigt an. Deshalb liegt die der Steuerungseinrichtung 6 vorgegebene und in dieser abgespeicherte Leistungsgrenzaufnahme zwischen der Leistungsaufnahme bei bestimmungsgemäßer Funktion und der angestiegenen Leistungsaufnahme bei nicht bestimmungsgemäßer Funktion. Das Überschreiten der Leistungsgrenzaufnahme erfolgt beim Angriff von unten nach oben.

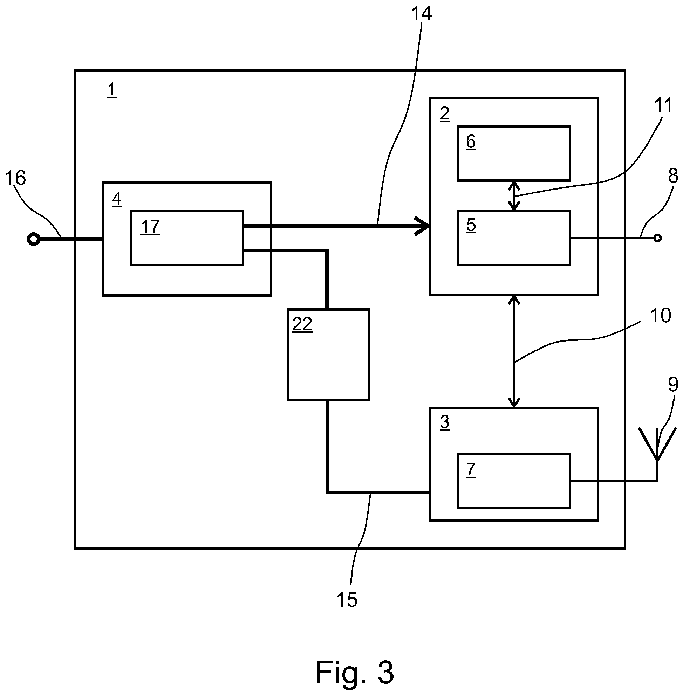

Fig. 3 zeigt wesentliche Merkmale eines dritten Ausführungsbeispiels eines elektrischen Geräts 1, welches als Feldgerät und für den Einsatz in der Prozessindustrie ausgebildet ist. Das elektrische Gerät weist zunächst eine abgesicherte Funktionseinrichtung 2, eine ungesicherte Funktionseinrichtung 3 und eine Versorgungseinrichtung 4 auf.

Die abgesicherte Funktionseinrichtung 2 weist eine erste Schnittstelleneinrichtung 5 und eine Steuerungseinrichtung 6 und die ungesicherte Funktionseinrichtung 3 weist eine zweite Schnittstelleneinrichtung 7 auf. Die erste Schnittstelleneinrichtung 5 ist zur sicheren Kommunikation als leitungsgebundene Schnittstelle und die zweite Schnittstelleneinrichtung 7 ist zur unsicheren Kommunikation als Funkschnittstelle ausgebildet. Dazu weist die als leitungsgebundene Schnittstelle ausgebildete erste Schnittstelleneinrichtung 5 einen Schnittstellenanschluss 8 für ein leitungsgebundenes Übertragungsmedium und die als Funkschnittstelle ausgebildete zweite Schnittstelleneinrichtung 7 eine Antenne 9 auf. Die abgesicherte Funktionseinrichtung 2 und die ungesicherte Funktionseinrichtung 3 sind zur Kommunikation untereinander über einen ersten Kommunikationskanal 10 ausgebildet. Auch die Steuerungseinrichtung 6 und die erste Schnittstelleneinrichtung 5 sind zur Kommunikation untereinander ausgebildet, und zwar über einen zweiten Kommunikationskanal 11.

Die Versorgungseinrichtung 4 weist eine einzige Versorgungseinheit 17 auf. Im Betrieb des elektrischen Geräts 1 versorgt die Versorgungseinheit 17 die abgesicherte Funktionseinrichtung 2 und die ungesicherte Funktionseinrichtung 3 mit elektrischer Energie. Dazu ist zwischen der Versorgungseinheit 17 und der abgesicherten Funktionseinrichtung 2 ein erster Leistungspfad 14 und zwischen der Versorgungseinheit 17 und der ungesicherten Funktionseinrichtung 3 ein zweiter Leistungspfad 15 angeordnet. Die zum Betrieb benötigte Energie wird dem elektrischen Gerät 1 über einen dritten Leistungspfad 16 zugeführt, der an eine externe Versorgungsquelle anzuschließen ist. Mit der über den dritten Leistungspfad 16 zugeführten Energie wird zunächst die Versorgungseinheit 17 und aus dieser dann die abgesicherte Funktionseinrichtung 2 und die ungesicherte Funktionseinrichtung 3 versorgt.

Im zweiten Leistungspfad 15 ist eine Leistungsbegrenzungseinrichtung (22) angeordnet. Die Leistungsbegrenzungseinrichtung (22) ist eine integrierte Schaltung und ausgebildet, eine Leistungsübertragung über die Leistungsbegrenzungseinrichtung (22) zu begrenzen, sodass eine von der Versorgungseinheit (17) abgebbare Leistung jedenfalls zur Versorgung der abgesicherten Funktionseinrichtung (2) ausreichend ist.

### Bezugszeichen

- 1: elektrisches Gerät
- 2: abgesicherte Funktionseinrichtung
- 3: ungesicherte Funktionseinrichtung
- 4: Versorgungseinrichtung
- 5: erste Schnittstelleneinrichtung
- 6: Steuerungseinrichtung
- 7: zweite Schnittstelleneinrichtung
- 8: Schnittstellenanschluss
- 9: Antenne
- 10: erste Kommunikationskanal
- 11: zweite Kommunikationskanal
- 12: erste Versorgungseinheit
- 13: zweite Versorgungseinheit
- 14: erster Leistungspfad
- 15: zweiter Leistungspfad
- 16: dritter Leistungspfad
- 17: Versorgungseinheit
- 18: Schalter
- 19: Steuerpfad
- 20: Spannungsmesspfad
- 21: Strommesspfad
- 22: Leistungsbegrenzungseinrichtung

## Patentansprüche

1. Elektrisches Gerät (1) mit einer abgesicherten Funktionseinrichtung (2), einer ungesicherten Funktionseinrichtung (3) und einer Versorgungseinrichtung (4),
wobei die abgesicherte Funktionseinrichtung (2) eine erste Schnittstelleneinrichtung (5) zur sicheren Kommunikation und eine Steuerungseinrichtung (6) und die ungesicherte Funktionseinrichtung (3) eine zweite Schnittstelleneinrichtung (7) zur unsicheren Kommunikation aufweist und
wobei die abgesicherte Funktionseinrichtung (2) und die ungesicherte Funktionseinrichtung (3) zur Kommunikation untereinander ausgebildet sind, **dadurch gekennzeichnet,**
**dass** die Versorgungseinrichtung (4) eine Versorgungseinheit (17) aufweist, dass zwischen der Versorgungseinheit (17) und der abgesicherten Funktionseinrichtung (2) ein erster Leistungspfad (14) zur Versorgung der abgesicherten Funktionseinrichtung (2) und zwischen der Versorgungseinheit (17) und der ungesicherten Funktionseinrichtung (3) ein zweiter Leistungspfad (15) zur Versorgung der ungesicherten Funktionseinrichtung (3) mit elektrischer Energie aus der Versorgungseinheit (17) angeordnet ist,
**dass** im zweiten Leistungspfad (15) ein Schalter (18) angeordnet ist,
**dass** der Schalter (18) in einen ersten Schaltzustand und in einen zweiten Schaltzustand steuerbar ist,
**dass** der zweite Leistungspfad (15) im Schalter (18) im ersten Schaltzustand durchgeschleift und im zweiten Schaltzustand aufgetrennt ist,
**dass** im Betrieb die Steuerungseinrichtung (6) den Schalter (18) in den ersten Schaltzustand steuert, unter Verwendung eines eine Leistungsaufnahme der ungesicherten Funktionseinrichtung wiedergebenden Indikators die bestimmungsgemäße Funktion der ungesicherten Funktionseinrichtung (3) überwacht und bei Überschreitung eines vorgegebenen Indikatorgrenzwerts den Schalter (18) in den zweiten Schaltzustand steuert.

2. Elektrisches Gerät (1) nach Anspruch 1, **dadurch gekennzeichnet, dass** der Schalter (18) unangesteuert im zweiten Schaltzustand ist.

3. Elektrisches Gerät nach Anspruch 1 oder 2, **dadurch gekennzeichnet, dass** der Indikator eine Versorgungsspannung am zweiten Leistungspfad (15) und der Indikatorgrenzwert eine Versorgungsgrenzspannung ist und die Steuerungseinrichtung (6) im Betrieb die Versorgungsspannung misst.

4. Elektrisches Gerät (1) nach einem der Ansprüche 1 bis 3, **dadurch gekennzeichnet, dass** der Indikator ein Versorgungsstrom durch den zweiten Leistungspfad (15) und der Indikatorgrenzwert ein Versorgungsgrenzstrom ist und die Steuerungseinrichtung (6) im Betrieb den Versorgungsstrom misst.

5. Elektrisches Gerät (1) nach einem der Ansprüche 1 bis 4, **dadurch gekennzeichnet, dass** der Indikator eine Leistungsaufnahme über den zweiten Leistungssignalpfad (15) und der Indikatorgrenzwert eine Leistungsgrenzaufnahme ist und die Steuerungseinrichtung (6) im Betrieb die Leistungsaufnahme bestimmt.

6. Elektrisches Gerät (1) mit einer abgesicherten Funktionseinrichtung (2), einer ungesicherten Funktionseinrichtung (3) und einer Versorgungseinrichtung (4),
wobei die abgesicherte Funktionseinrichtung (2) eine erste Schnittstelleneinrichtung (5) zur sicheren Kommunikation und eine Steuerungseinrichtung (6) und die ungesicherte Funktionseinrichtung (3) eine zweite Schnittstelleneinrichtung (7) zur unsicheren Kommunikation aufweist und
wobei die abgesicherte Funktionseinrichtung (2) und die ungesicherte Funktionseinrichtung (3) zur Kommunikation untereinander ausgebildet sind, **dadurch gekennzeichnet,**
**dass** die Versorgungseinrichtung (4) eine erste Versorgungseinheit (12) und eine zweite Versorgungseinheit (13) aufweist,
**dass** die erste Versorgungseinheit (12) und die zweite Versorgungseinheit (13) separat voneinander sind und
**dass** im Betrieb die erste Versorgungseinheit (12) die abgesicherte Funktionseinrichtung (2) und die zweite Versorgungseinheit (13) die ungesicherte Funktionseinrichtung (3) mit elektrischer Energie versorgt.

7. Elektrisches Gerät (1) mit einer abgesicherten Funktionseinrichtung (2), einer ungesicherten Funktionseinrichtung (3) und einer Versorgungseinrichtung (4),
wobei die abgesicherte Funktionseinrichtung (2) eine erste Schnittstelleneinrichtung (5) zur sicheren Kommunikation und eine Steuerungseinrichtung (6) und die ungesicherte Funktionseinrichtung (3) eine zweite Schnittstelleneinrichtung (7) zur unsicheren Kommunikation aufweist und
wobei die abgesicherte Funktionseinrichtung (2) und die ungesicherte Funktionseinrichtung (3) zur Kommunikation untereinander ausgebildet sind, **dadurch gekennzeichnet,**
**dass** die Versorgungseinrichtung (4) eine Versorgungseinheit (17) aufweist, dass zwischen der Versorgungseinheit (17) und der abgesicherten Funktionseinrichtung (2) ein erster Leistungspfad (14) zur Versorgung der abgesicherten Funktionseinrichtung (2) und zwischen der Versorgungseinheit (17) und der ungesicherten Funktionseinrichtung (3) ein zweiter Leistungspfad (15) zur Versorgung der ungesicherten Funktionseinrichtung (3) mit elektrischer Energie aus der Versorgungseinheit (17) angeordnet ist,
**dass** im zweiten Leistungspfad (15) eine Leistungsbegrenzungseinrichtung (22) angeordnet ist und
**dass** die Leistungsbegrenzungseinrichtung ausgebildet ist, eine Leistungsübertragung über die Leistungsbegrenzungseinrichtung (22) zu begrenzen, sodass eine von der Versorgungseinheit (17) abgebbare Leistung jedenfalls zur Versorgung der abgesicherten Funktionseinrichtung (2) ausreichend ist.

8. Elektrisches Gerät nach Anspruch 7, **dadurch gekennzeichnet, dass** die Leistungsbegrenzungseinrichtung eine integrierte Schaltung ist.

9. Elektrisches Gerät (1) nach einem der Ansprüche 1 bis 8, **dadurch gekennzeichnet, dass** die erste Schnittstelleneinrichtung (5) als leitungsgebundene Schnittstelle und die zweite Schnittstelleneinrichtung (7) als Funkschnittstelle ausgebildet ist.

10. Elektrisches Gerät (1) einem der Ansprüche 1 bis 9, **dadurch gekennzeichnet, dass** das elektrische Gerät (1) zum Einsatz in der Prozessindustrie ausgebildet ist.

11. Elektrisches Gerät (1) nach einem der Ansprüche 1 bis 10, **dadurch gekennzeichnet, dass** das elektrische Gerät (1) als Feldgerät ausgebildet ist.
